# EUROPEAN PATENT APPLICATION

(11) **EP 2 133 809 A2**
(43) Date of publication of application: **16.12.2009**
(21) Application number: 09251477.7
(22) Date of filing: 03.06.2009
(51) Int. Cl.: G06F 21/00

(54) **Techniques to establish trust of a web page to prevent malware redirects from web searches or hyperlinks**

(30) Priority: 10.06.2008 US 136227
(71) Applicant: Intel Corporation, Santa Clara, CA 95052 (US)
(72) Inventor: Li Hong C, El Dorado Hills, CA 95762 (US); Meyers Don, Rescue, CA 95762 (US)
(74) Representative: Beresford, Keith Denis Lewis

(57) **Abstract**

Various techniques to establish trust of a web page to prevent malware redirects from web searches or hyperlinks are described. An apparatus may include a trust engine to determine an indication of trustworthiness of each of one or more web pages. The trust engine to append information in each of the tags of the one or more web pages based on the determined indication of trustworthiness for that web page. Other embodiments may be described and claimed.

## Description

### BACKGROUND

Recently, massive amounts of malware redirects associated with Internet searches have been reported. It has been reported that tens of thousands of individual web pages have been uncovered that have been meticulously created with the goal of obtaining high search engine ranking. These malware sites use common, innocent terms to redirect users to their web sites. A goal of the malware sites is to infect people's computers with malware.

Current search engines return all web pages that contain keywords to users with summary information provided by the metadata. Thus, users cannot tell from the list of search results whether or not the returned web pages or sites contain or are likely to contain malware.

### BRIEF DESCRIPTION OF THE DRAWINGS

Figure 1 illustrates one embodiment of a system.
Figure 2 illustrates one embodiment of a trust engine.
Figure 3 illustrates one embodiment of records in a web page history database.
Figure 4 illustrates one embodiment of levels of record tracking by a search engine.
Figure 5 illustrates one embodiment of a logic diagram.
Figure 6 illustrates one embodiment of a logic diagram.
Figure 7 illustrates one embodiment of a system.

### DETAILED DESCRIPTION

Various embodiments may be generally directed to techniques to establish trust of a web page to prevent malware redirects from web searches or hyperlinks. This may be accomplished by establishing the trustworthiness of each web page or hyperlink that results in a web search via a search engine. An indication of the trustworthiness of each of the web pages is then provided to the user to help prevent the user from going to web pages that are likely to contain malware content. Other embodiments may be described and claimed.

Various embodiments may comprise one or more elements. An element may comprise any structure arranged to perform certain operations. Each element may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

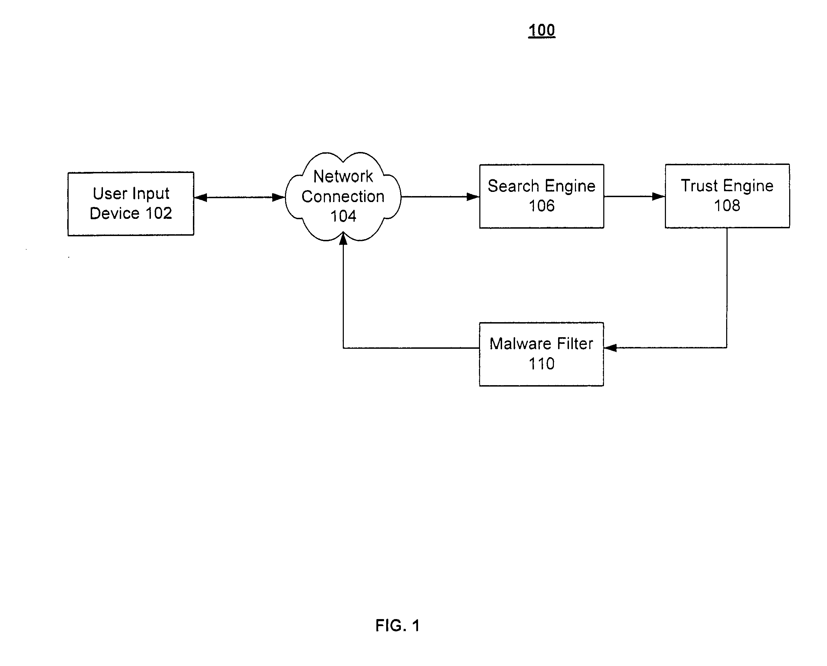

Figure 1 illustrates one embodiment of a system 100. As shown in figure 1, system 100 may comprise multiple elements, such as a user input device 102, a network connection 104, a search engine 106, a trust engine 108 and a malware filter 110. The embodiments, however, are not limited to the elements shown in this figure.

At a high level and in an embodiment, a user may provide keyword(s) to perform a web search to search engine 106 via user input device 102 and network connection 104. Search engine 106 determines a list of web page or hyperlink results based on the provided keyword(s). Search engine 106 then provides the list of web page results to trust engine 108. For each web page in the list, trust engine 108 determines the trustworthiness of the web page. In some embodiments, the trustworthiness of the web page reflects whether the web page may contain malware content. Trust engine 108 returns the list of web page results with information added to each of the web page tags that indicates the trust level of the individual web pages to the user. The user can review the added trust level information to help prevent the user from going to web pages that are likely to contain malware content. In an embodiment, an optional malware filter 110 may be used to filter out the potentially malicious sites or web pages before returning the search results to the user.

In various embodiments, search engine 106 and trust engine 108 may comprise entities arranged to perform a web search and to provide a list of web page or hyperlink results that include an indication of malware content trustworthiness to the user. Trust engine 108 may be integrated into search engine 106 or may be a separate entity from engine 106. Engines 106 and 108 may be implemented using hardware elements, software elements, or a combination of both, as desired for a given set of design parameters and performance constraints. Furthermore, engines 106 and 108 may be implemented as part of any number of different networks, systems, devices or components, such as a processor-based system, a computer system, a computer sub-system, a computer, an appliance, a workstation, a terminal, a server, a personal computer (PC), a laptop, an ultra-laptop, a handheld computer, a personal digital assistant (PDA), a set top box (STB), a telephone, a mobile telephone, a cellular telephone, a handset, a smart phone, a tablet computer, a wireless access point, a base station (BS), a subscriber station (SS), a mobile subscriber center (MSC), a radio network controller (RNC), a microprocessor, an integrated circuit such as an application specific integrated circuit (ASIC), a programmable logic device (PLD), a processor such as a general purpose processor, a digital signal processor (DSP) and/or a network processor, an interface, a router, a hub, a gateway, a bridge, a switch, a circuit, a logic gate, a register, a semiconductor device, a chip, a transistor, or any other device, machine, tool, equipment, component, or combination thereof. The embodiments are not limited in this context.

In various embodiments, engines 106 and 108 may be implemented in different devices, respectively, with the devices arranged to communicate over various types of wired or wireless communications media. Furthermore, it may be appreciated that engines 106 and 108 may be implemented as different components or processes in a single device as well.

### The embodiments are not limited in this context.

The trustworthiness of a web page or hyperlink may be defined and modified based on any number of trust criteria as desired for a given implementation. Examples of trust criteria may include whether the web page has a fully qualified domain address, the network address (e.g., Internet Protocol address) for the device hosting the web page, time in existence for any of the preceding criteria, outside influencers, third party feedback (e.g., a service that publishes a listing of malware sites), the results of the validation of the web page (e.g., date that malware content was identified (if applicable)), first date seen by the search engine, last date seen by the search engine, total number of times seen by the search engine, and so forth. In embodiments, the trust values may be adjusted over time to reflect any changes in the level of trust accorded to a given web page.

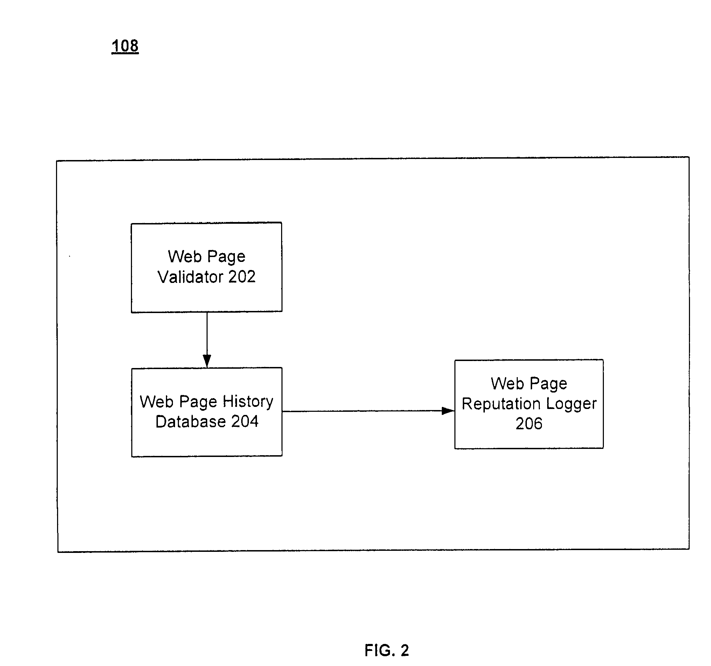

In various embodiments, trust engine 108 may include a web page validator 202, a web page history database 204 and a web page reputation logger 206, as is shown in Figure 2. At a high level and in an embodiment, before search engine 106 returns all of the web page results to the user based on the user keyword(s), trust engine 108 adds information on the history of each of the web pages and provides the history information as a reference to the user as part of the search result. Information on the history of web pages is stored in database 204. If information for a particular web page is not in history database 204, then validator 202 is used to validate the web page or determine whether the web page is hosted by a malware site (potentially contains malware content). Validator 202 may operate in real-time or offline. The results of validator 202 are then recorded in database 204. Web page reputation logger 206 then uses the information in history database 204 to append information to each of the web page tags for the web page results. The appended information indicates to the user the malware content trustworthiness of each of the web page results. For example, the appended information may have information such as "this web page or site has been seen by this search engine for 1234 days", or "this web page or site may contain malicious software", or "this web site is not well known and has a low trust level", or "this web site is very well known and has a high trust level", and so forth. Here, when search engine 106 returns all of the web page results to the user with the added trustworthiness information, the user is less likely to go to a web page that is likely to contain malware content.

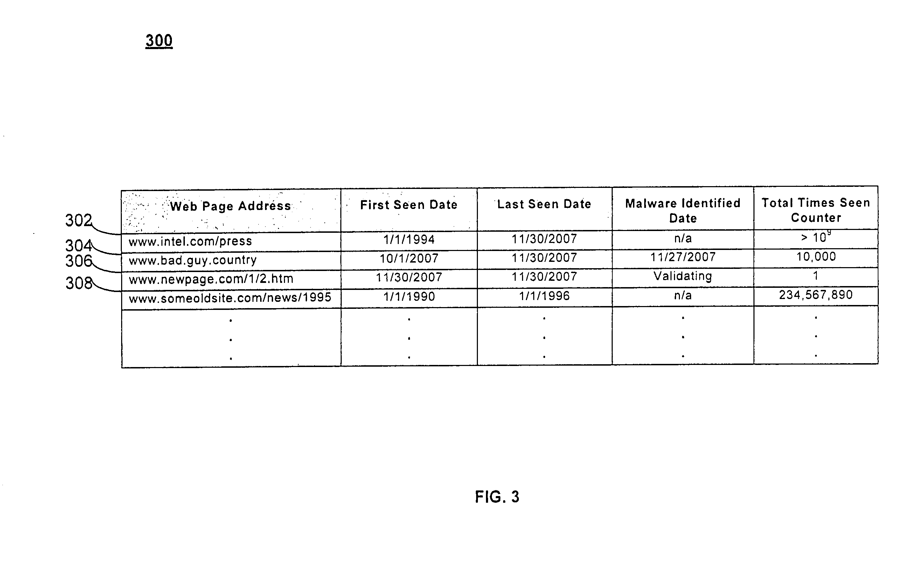

The information stored in history database 204 is used to determine the trustworthiness of a web page or hyperlink. As described above, this information may be defined and modified based on any number of trust criteria as desired for a given implementation. Some possible examples of trust criteria were provided above and are limitless in nature. Figure 3 illustrates an example listing of records that may be maintained by history database 204. The example shown in Figure 3 includes the trust criteria of "Web Page Address", "First Seen Date", "Last Seen Date", "Malware Identified Date" and "Total Times Seen Counter" for each record 302 through 308. In embodiments, the values of the trust criteria may be adjusted over time to reflect any changes.

For example, record 302 has a web page address of www.intel.com/press; was first seen by search engine 106 on January 1, 1994; was last seen by search engine 106 on November 30, 2007; was never identified as containing malware content by validator 202; and has been seen a total of greater than 10⁹ times by search engine 106. Here, based on the information for record 302, information such as "this web site is very well known and has a high trust level" may be appended by reputation logger 206 to the web page tag for the web page of www.intel.com/press.

Another example record illustrated in Figure 3 is record 304. Record 304 has a web page address of www.bad.guy.county; was first seen by search engine 106 on October 1, 2007; was last seen by search engine 106 on November 30, 2007; was identified as containing malware content by validator 202 on November 27, 2007; and has been seen a total of 10,000 times by search engine 106. Here, based on the information for record 304, information such as "this web page or site may contain malicious software" may be appended by reputation logger 206 to the web page tag for the web page of www.bad.guy.country.

In some embodiments, the scalability of history database 204 is of a concern since database 204 would grow indefinitely if a record for every resulting web page was maintained indefinitely. Various embodiments provide for a list of records in database 204 that is dynamic and, therefore, contains less waste records by purging records that meet certain criteria. Although such criteria may be limitless in nature, they may include such criteria as a record that is older than a unit of measure (e.g., record last seen by the search engine more than 1 year), a record that includes a web page that no longer exists, a record whose web page has been seen by the search engine under a certain number of times, and so forth. In embodiments, if a web page still exists and it was determined to contain malware content, the record may be excluded from ever being purged from database 204. Referring again to Figure 3, record 308 may be considered to be a record that could be purged from the database. Here, web page www.someoldsite.com/news/1995 may be purged based on the last time it has been seen by search engine 106. Figure 3 is provided for illustration purposes only and is not meant to limit embodiments of the invention.

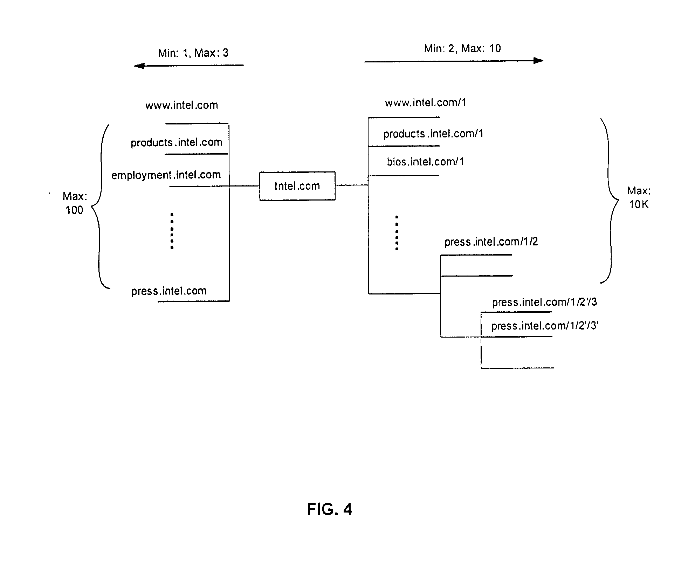

In embodiments, search engine 106 and/or trust engine 108 may also set criteria for the level of record tracking in history database 204. One such example is illustrated in Figure 4. As shown in Figure 4, such criteria may limit the granularity of the domain name (left pointing arrow where minimum is 1 and the maximum is 3), the granularity of page levels (right point arrow where minimum is 2 and maximum is 10), the number of different domain names (vertically on the left where 100 is the maximum), the number of different page levels (vertically on the right where 10K is the maximum) and the number of horizontal levels times the number of vertical levels (where it must be less than 1 million). Figure 4 is provided for illustration purposes only and is not meant to limit embodiments of the invention.

Operations for the above embodiments may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof. The embodiments are not limited in this context.

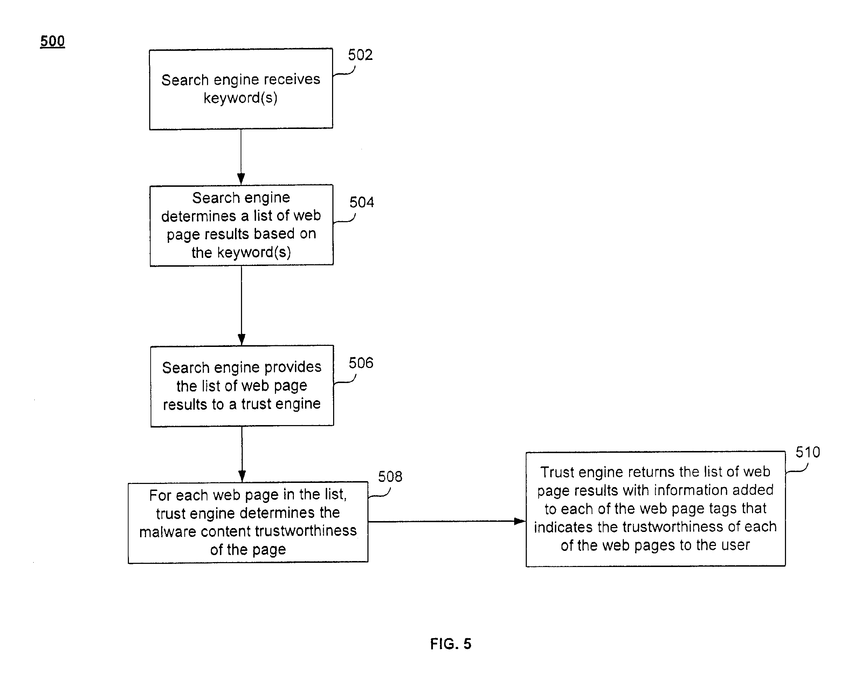

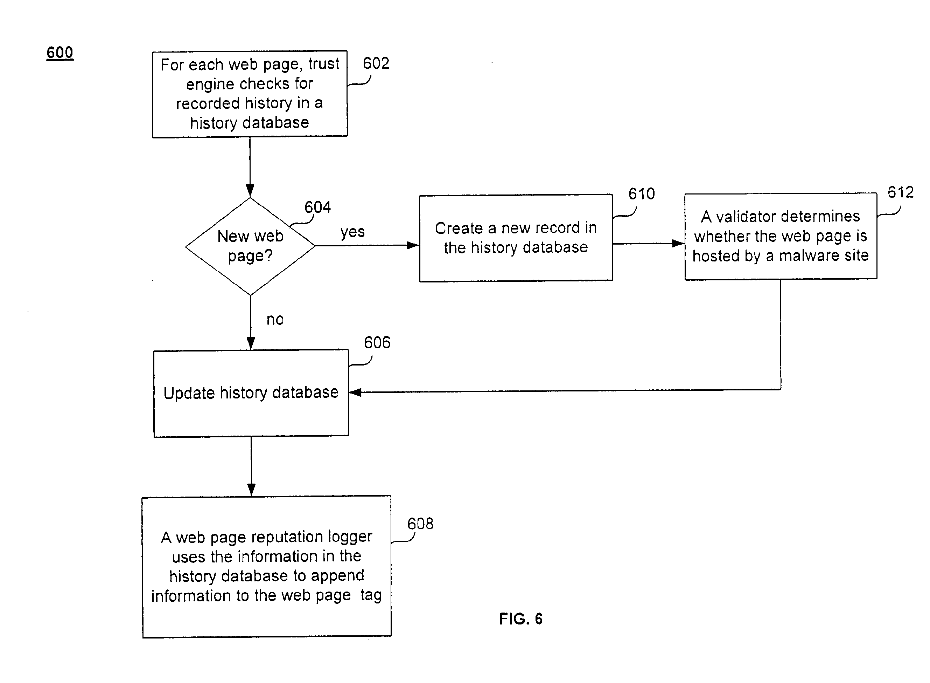

Figure 5 illustrates one embodiment of a logic flow. Figure 5 illustrates a logic flow 500. Logic flow 500 may be representative of the operations executed by one or more embodiments described herein, such as search engine 106 and/or trust engine 108 of Figure 1, for example. As shown in logic flow 500, the search engine receives keyword(s) from a user to perform a web search (block 502). The search engine determines a list of web page or hyperlink results based on the provided keyword(s) (block 504). The search engine provides the list of web page results to a trust engine (block 506). For each web page in the list, the trust engine determines the malware content trustworthiness of the page (block 508). Block 508 is described in more detail below with reference to Figure 6. The trust engine returns the list of web page results with information added to each of the web page tags that indicates the trustworthiness of the web page to the user (block 510). With this additional information, the user will hopefully be able to avoid going to web pages that are likely to contain malware content.

Figure 6 illustrates a logic flow 600 and an embodiment of how the trust engine determines the malware content trustworthiness of a page (block 508 from Figure 5). Referring to logic flow 600, for each web page, the trust engine checks for recorded history in the history database (such as history database 204 from Figure 2) (block 602). At diamond 604, if the web page is new then a new record is created in the history database for the web page (block 610). A validator (such as web page validator 202 of Figure 2) determines whether the web page is hosted by a malware site (block 612). The history database is updated accordingly (block 606). At diamond 604, if the web page is already included in the history database, then the database is also updated accordingly (block 606). A web page logger (such as logger 206 from Figure 2) uses the information in the history database to append information about the malware content trustworthiness to each web page tag (block 608).

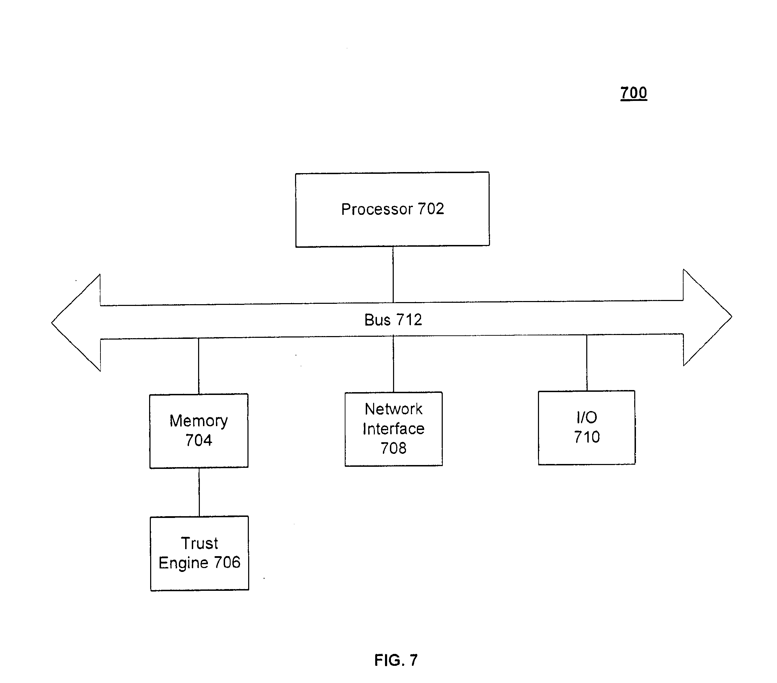

Figure 7 illustrates one embodiment of a system. Figure 7 illustrates a system 700. System 700 may be representative of a system or architecture suitable for use with one or more embodiments described herein, such as search engine 106 and/or trust engine 108, for example. As shown in Figure 7, system 700 may comprise a processor-based system including a processor 702 coupled by a bus 712 to a memory 704, network interface 708, and an input/output (I/O) interface 710. Memory 704 may be further coupled to a trust engine 706. More or less elements may be implemented for system 700 as desired for a given implementation.

In various embodiments, processor 702 may represent any suitable processor or logic device, such as a complex instruction set computer (CISC) microprocessor, a reduced instruction set computing (RISC) microprocessor, a very long instruction word (VLIW) microprocessor, a processor implementing a combination of instruction sets, or other processor device. In one embodiment, for example, processor 702 may be implemented as a general purpose processor, such as a processor made by Intel® Corporation, Santa Clara, California. Processor 702 may also be implemented as a dedicated processor, such as a controller, microcontroller, embedded processor, a digital signal processor (DSP), a network processor, a media processor, an input/output (I/O) processor, a media access control (MAC) processor, a radio baseband processor, a field programmable gate array (FPGA), a programmable logic device (PLD), and so forth. The embodiments, however, are not limited in this context.

In one embodiment, memory 704 may represent any machine-readable or computer-readable media capable of storing data, including both volatile and non-volatile memory. For example, memory 704 may include read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, or any other type of media suitable for storing information. It is worthy to note that some portion or all of memory 704 may be included on the same integrated circuit as processor 702. Alternatively some portion or all of memory 704 may be disposed on an integrated circuit or other medium, for example a hard disk drive, that is external to the integrated circuit of processor 702, and processor 702 may access memory 704 via bus 712. The embodiments are not limited in this context.

In various embodiments, system 700 may include network interface 708. System 700 may be implemented as a wireless device, a wired device, or a combination of both. When implemented as a wireless device, network interface 708 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired device, network interface 708 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and so forth. Examples of wired communications media may include a wire, cable, metal leads, printed circuit board (PCB), backplane, switch fabric, semiconductor material, twisted-pair wire, co-axial cable, fiber optics, and so forth. The embodiments are not limited in this context.

In various embodiments, I/O 710 may include any desired input and output elements that may be accessible or shared by elements of system 700, such as a keyboard, a mouse, navigation buttons, dedicated hardware buttons or switches, a camera, a microphone, a speaker, voice codecs, video codecs, audio codecs, a display, a touch screen, and so forth. The embodiments are not limited in this context.

In various embodiments, trust engine 706 may be software suitable for executing by a general purpose processor or special purpose processor, such as processor 702. Trust engine 706 may also be implemented by hardware, or a combination of hardware and software, as desired for a given implementation. The embodiments are not limited in this context.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

While certain features of the embodiments have been illustrated as described herein, many modifications, substitutions, changes and equivalents will now occur to those skilled in the art. It is therefore to be understood that the appended claims are intended to cover all such modifications and changes as fall within the true spirit of the embodiments.

## Claims

1. An apparatus comprising a trust engine to determine an indication of trustworthiness of each of one or more web pages, wherein the trust engine to append information in each of the tags of the one or more web pages based on the determined indication of trustworthiness for that web page.

2. The apparatus of claim 1, wherein the trustworthiness is an indication of whether a web page contains malware content.

3. The apparatus of claim 2, wherein a reputation logger uses information stored in a history database to determine the information to append to each of the tags of the one or more web pages.

4. The apparatus of claim 3, wherein the history database to store records, wherein each record to represent information for a web page based on criteria, wherein the criteria includes one or more of a date when the web page was first seen, a date when the web page was last seen, a date when the web page was identified as containing malware content and a counter value indicating a total number of times the web page was seen.

5. A system, comprising:
a communications interface; and
a search engine to conduct a web search based on one or more keywords from a user to produce a list of web pages, wherein the search engine to determine an indication of trustworthiness of each of the web pages, wherein the search engine to append information in each of the tags of the one or more web pages based on the determined indication of trustworthiness for that web page.

6. The system of claim 5, wherein the trustworthiness is an indication of whether a web page contains malware content.

7. The system of claim 5, wherein a reputation logger uses information stored in a history database to determine the information to append to each of the tags of the one or more web pages.

8. The system of claim 7, wherein the history database to store records, wherein each record to represent information for a web page based on criteria, wherein the criteria includes one or more of a date when the web page was first seen, a date when the web page was last seen, a date when the web page was identified as containing malware content and a counter value indicating a total number of times the web page was seen.

9. A method, comprising:
determining an indication of trustworthiness of each of one or more web pages; and
appending information in each of the tags of the one or more web pages based on the determined indication of trustworthiness for that web page.

10. The method of claim 9, wherein the trustworthiness is an indication of whether a web page contains malware content.

11. The method of claim 9, further comprising: using information stored in a history database to determine the information to append to each of the tags of the one or more web pages.

12. The method of claim 11, wherein the history database to store records, wherein each record to represent information for a web page based on criteria, wherein the criteria includes one or more of a date when the web page was first seen, a date when the web page was last seen, a date when the web page was identified as containing malware content and a counter value indicating a total number of times the web page was seen.

13. The method of claim 12, wherein the records are dynamically updated.

14. An article comprising a machine-readable storage medium containing instructions that if executed enable a system to determine an indication of trustworthiness of each of one or more web pages; and append information in each of the tags of the one or more web pages based on the determined indication of trustworthiness for that web page.

15. The article of claim 14, wherein the trustworthiness is an indication of whether a web page contains malware content.
